(19) Europäisches Patentamt European Patent Office Office européen des brevets

(11) **EP 2 006 810 A2**

(12) **EUROPEAN PATENT APPLICATION**
published in accordance with Art. 153(4) EPC

(43) Date of publication:
**24.12.2008 Bulletin 2008/52**

(51) Int Cl.:
**G07C 15/00** *(2006.01)*

(21) Application number: **06725815.2**

(22) Date of filing: **13.03.2006**

(86) International application number:
**PCT/ES2006/000121**

(87) International publication number:
**WO 2007/104802 (13.03.2006 Gazette 2013/06)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Kinamik Data Integrity, S.L.
08007 Barcelona (ES)**

(72) Inventors:
• **BARDERA BOSCH, Joan Miquel
E-08032 Barcelona (ES)**

• **RIERA JORBA, Andreu
E-08251 Santpedor (Barcelona) (ES)**

(74) Representative: **Gislon, Gabriele
Torner, Juncosa i Associats, S.L.
c/ Bruc, 21
08010 Barcelona (ES)**

(54) **HIGHLY EFFICIENT METHOD AND SYSTEM FOR SECURE GENERATION OF RANDOM NUMBERS**

(57)    The present invention describes a highly efficient method and system for the secure and auditable generation of random numbers. To that end, it uses a MAC cryptographic function, digital information received externally and/or stored in the random number generation module and an own cryptographic key.

Figure 1

## Description

Field of the Invention

The present invention is comprised in the field of the generation of random numbers by means of computer and/or electronic systems, and describes a highly efficient method for the secure and auditable generation of random numbers. The present invention further facilitates that said generation is shared without negatively affecting the speed of the generation of the random numbers.

Background of the Invention

Random numbers are used in a wide variety of situations such as games of chance, data transmission from a satellite, predicting the weather or as the key for setting up a GSM mobile telephony call.

Random numbers generated by electronic means can basically be of two different types: firstly there are random numbers which have been generated by means of a hardware generator (for example obtaining by chance from a natural noise); and secondly there are pseudo-random numbers generated by means of a software algorithm.

Both random number hardware generators and software generators can have excellent statistical performance with regard to the distribution of the resulting values. In other words, these methods can be effectively used as a basis for obtaining sequences of numbers with a random and unpredictable behavior. However, in all cases these methods suffer a serious security problem in practice: the generation of random numbers is under the control of a single party and there is no mechanism which allows auditing the correct generation thereof.

Currently most processes or applications requiring random numbers manage their generation in a centralized manner by delegating this function to a single random number generator. On one hand, this centralized generator is excessively vulnerable to being tampered with (especially by people or agents with access or privileges over said centralized generator). On the other hand, the generation used also does not offer any type of reliable mechanism for subsequently auditing the impartiality of the random numbers generated: the audit is usually based on verifying if the sequences of generated numbers actually follow an even random distribution.

However this statistical verification or audit generally does not ensure that said numbers have been used according to the order in which they have been generated (in other words, the system could assign them as it sees fit). This verification in reality also does not offer any assurance regarding the actual source of the random numbers: the random numbers generated by the correct generator could have simply been discarded and replaced by others arbitrarily determined (although with a statistically correct distribution in order to successfully pass the audit). In short, the current use of random number generators in a centralized manner involves an enormous difficulty to verify with assurances if a random number has been generated by a certain generator (authenticity) and has not been tampered with (integrity).

Patent US5778069 describes an example of a system for centralized generation of random numbers which only allows the audit verifying the homogeneous distribution of the generated numbers and which therefore suffers the previously described security problems.

In order to overcome these types of drawbacks, there are currently methods which resort to the generation of random numbers in a non-centralized (shared) manner. In this case, the random numbers are not unilaterally determined by a single generator but rather come from the interaction of two or more parties. Only the full cooperation of all the parties involved could carry out a fraudulent tampering of the random numbers. The shared generation thus allows ensuring the impartiality of the generated random numbers. The methods for shared generation of random numbers are generally provided with cryptographic capacities which allow reliable audits as to the authenticity and integrity of the generated random numbers.

The main limitation of the methods for shared and/or auditable generation of random numbers is their excessive complexity and their difficult practical implementation due to the computational and/or data transfer costs which they involve. Most of them require cryptographic commitment protocols (the parties previously commit to the result without needing to demonstrate it, such that once it is revealed it can be tested that it indeed corresponds to the promised value), as well as carrying out several sequential interactions between the different participating parties before being able to obtain the resulting random number. Computationally expensive cryptographic primitives such as the digital signature for example, are also usually excessively used.

Included among the existing methods for shared generation of random numbers is the method published by Bruce Schneier in the book "Applied Cryptography: protocols, algorithms, and source code in C" (ISBN 0-471-59756-2) in section 4.7 entitled "Fair coin flips". This section describes a protocol in which two parties independently generate a random number and, before exchanging respective numbers, one of the parties (*party1*) sends a commitment of the generated number to the other party (*party2*). This commitment prevents *party1* from changing the value of its number without *party2* detecting it. Once the commitment is received, *party2* reveals its own number to *party1,* which calculates the final result by combining both numbers. Then *party1* reveals the result and its own number to *party2* which checks that the previously received commitment corresponds with the number of *party1* and that the final result has been correctly calculated.

Different implementations based on this method can be found in patent WO9829793. In these implementations the random number is generated in a shared manner by means of the collaboration of a game platform with the platforms of the players and/or a reliable third party or parties. To that end all participants must have their own random (or pseudo- random) number generator and the result is calculated from combining all of them. In order to prevent fraud, the participants must commit to their respective values before making them public to calculate the result.

Another method for shared generation of random numbers is described in patent WO9912135. Unlike the previous methods, in this case the random number is generated in a centralized manner by means of a pseudo-random number generator (PRNG), the seed initializing this PRNG being that which is randomly generated in a shared manner. Before making the different values for calculating the seed public, the parties participating in the generation also commit to their respective values.

Finally the method proposed in patent WO2004035159 must be mentioned. The method generates a set of random permutations from which the result of the game is calculated in a shared manner. As with the previous methods, the participants in the shared generation must commit to the values of the permutations before making them public.

The complexity of all these methods for shared generation of random numbers is derived from the number and difficulty of the steps that must be carried out in order to obtain the final random number: (i) the generation of random numbers by each of the participants, (ii) the generation and exchange of commitments of these random numbers between the participants before making said numbers public, (iii) the exchange of the numbers, (iv) the verification by the participants that the random numbers do indeed correspond with the previously exchanged commitments, and (v) the calculation of the result from combining the respective random numbers.

Several proposals based on the participation of only two different parties have appeared in order to simplify the complexity of the methods for shared generation of random numbers. Probably one of the most efficient implementations until now is that described in US6934846. This proposal reduces the complexity of the commitment exchanges by means of using the digital signature mechanism (cryptographic primitive intended to assure the authenticity and integrity of information by means of using a pair of asymmetric keys; see for example the digital signature scheme of RSA at http://www.rsasecurity.com/rsalabs/node.asp?id=2214 and Rabin's variant at http://www.rsasecurity.com/rsalabs/node.asp?id=2256, both active references as of March 2, 2006). However, despite the fact that the number of steps has been reduced, the computation of a digital signature for each random number which is to be generated is an excessively expensive operation in computational terms. In order to reduce this cost, said proposal also allows the generation of a sequence of random numbers from a single digital signature but only if these numbers are used in a single game transaction.

Finally, the proposal described in patent application US20050135608 must be mentioned This proposal chooses to use hash functions (cryptographic operation which is carried out on a set of data with any size such that another set of data with a fixed size and independent of the original size is obtained and has the property of being unequivocally associated to the initial data, being virtually impossible to find two different messages generating an identical hash) instead of digital signatures for the shared generation of random numbers. Although this option allows drastically reducing the computation costs, hash functions do not provide measurements which allow verifying the authenticity of the resulting value, therefore for the purpose of the audit they are not a good option by themselves.

The present invention intends to solve the security problems and main limitations of the existing methods for generation of random numbers, providing a proposal which facilitates a reliable audit of the impartiality, authenticity and integrity of the generated random numbers, but at the same time defining a highly efficient generation process with regard to computation costs.

The proposal of the present invention is especially suitable for those applications for generation of random numbers requiring maximum security at the same time maximizing execution speed.

Brief Description of the Invention

The present invention considers a method for the secure generation of random numbers in a reliable manner allowing a subsequent audit. It relates to one of the most highly efficient methods (quick in its execution in actual implantations) than that of those known until now. A system which allows implementing the method is also considered.

The proposed method and system pursue the following objectives:

- Ensuring the unpredictability in the generation of the numbers (i.e., no party can predict the resulting numbers);

- Facilitating any party (even third parties) with the subsequent audit of the correct generation and use of the generated random numbers (i.e., checking the impartiality, authenticity and integrity of the random numbers).

- Allowing actual implementations by means of hardware and software systems, which are extremely quick in their execution. This practical objective is of great importance in the case of systems which must support high simultaneous use loads of users, as is the case for example of real-time game systems operating through Internet.

An additional objective of the present invention is to assure the security and impartiality of the generation of random numbers by means of distributing the generation between at least two different parties such that none of the parties can have any possibility of predicting the resulting value, not even partially.

The proposed method and system make use of a set of cryptographic techniques which allow achieving the three considered objectives in a novel manner and improving the described current state of the art.

Brief Description of the Drawings

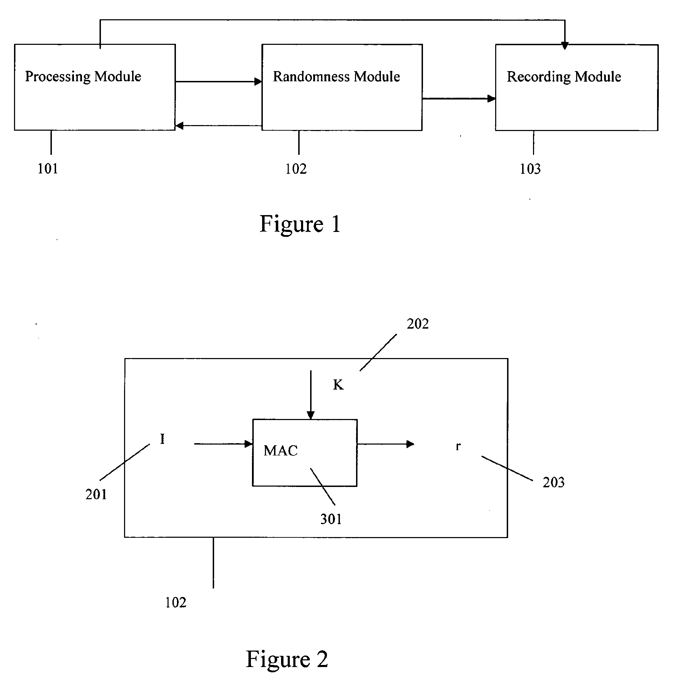

Figure 1 describe the different components used in the most advanced embodiment of a system fulfilling the features described by the present invention. These components are:

- The processing module (101): is an optional component of the invention which can communicate with the randomness module (102) for requesting and/or receiving a random number/s.
- The randomness module (102): is the basic component for the generation of the random numbers. Said component can receive requests or messages for generating random numbers from the processing module (101). The random numbers resulting from the internal process of the randomness module (102) are returned to said processing module (101) in order to be used.
- The recording module (103): is an additional component of the invention facilitating the audit of the process for generation of the random numbers. To that end it receives data or information from the randomness module (102) and/or from the processing module (101). Said data or information is saved in a secure manner by the recording module (103).

Figure 2 describes a basic embodiment of the method for the generation of at least one random number. In this embodiment the randomness module (102) generates a random result $r$ (203) by applying an *MAC* cryptographic function (301) on information $I$ (201) (input of the *MAC* function) using to that end a key $K$ (202). The result value $r$ (203) fulfills the properties necessary for being used directly as a random number or for obtaining a random number.

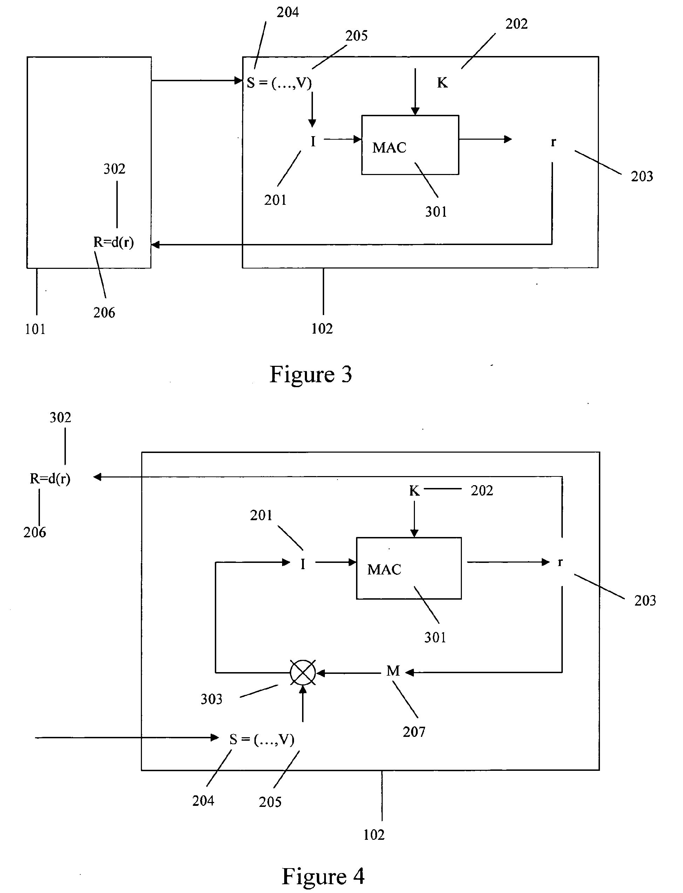

Figure 3 describes an embodiment example of shared generation of random numbers in which a processing module (101) and the randomness module (102) intervene. To that end the processing module (102) requests by means of a request S (204) the generation of a random number R (206) from the randomness module (102). For the generation of the random number to be shared, the processing module (101) includes in the request S (204) a preferably random value $V$ (205), which the randomness module (102) will use to prepare the input information $I$ (201) of the *MAC* function (301). Finally, a deterministic function d (302) is applied to the result $r$ (203) of the *MAC* function (301) to obtain the requested random number R (206). The random number R (206) is returned to the processing module (101) which requested it.

Figure 4 describes a shared embodiment example of random numbers in which the randomness module (102) reuses the random results $r$ (203) for the generation of new random numbers. In this example the values $V$ (205) received are further used so that the generation is shared. For this purpose the randomness module (102) prepares (303) digital information $I$ (201) by using the random result $r$ (203) obtained in the previous iteration, the information M (207) of the randomness module (102) and the value $V$ (205) contained in the received request S (204). The digital information $I$ (201) resulting from said preparation (303) is used as input of the *MAC* function (301), which also requires the use of the key $K$ (202). Finally, a deterministic function $d$ (301) is applied to the result $r$ (203) of said *MAC* operation (301) to obtain the random number R (206). Said result $r$ (203) is also used to obtain the value $M$ (207) used for the preparation (303) of the digital information $I$ (201) necessary for the generation of the random result $r$ (203) of the following iteration.

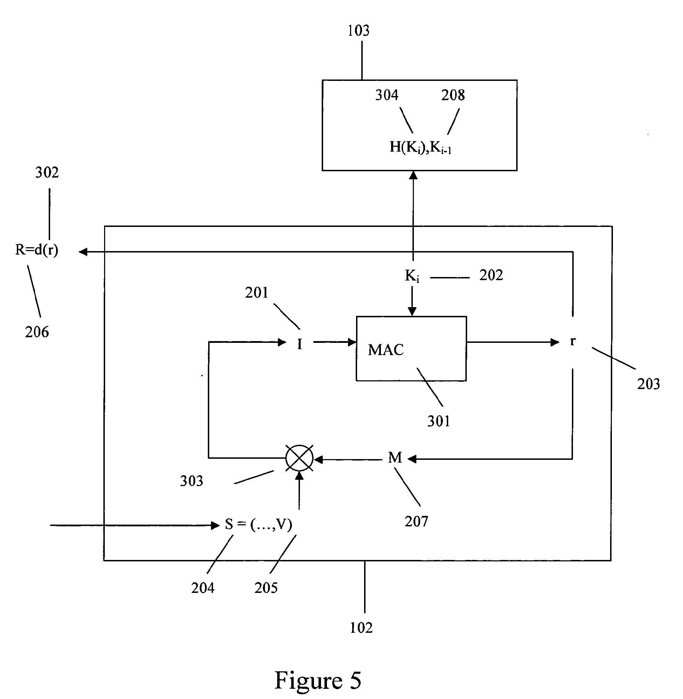

Figure 5 is an enlarged embodiment example of Figure 4 in which the value of the key $K$ (202) is further updated given a certain event such as the execution of a certain number of iterations or a the passing of a certain period of time. When said event happens, the randomness module (102) generates a new key $K_i$ (202) which will be used for the generation of the new random numbers, and sends to the recording module (103) the previous value of said key $K_{i-1}$ (208). In said example a commitment $H(K_i)$ (304) of the value of the current key $K_i$ (202) is also sent to the recording module (103). The information received by the recording module (103) is stored by said module to facilitate the audit of the random numbers R (206) previously generated with the previous value of the key $K_{i-1}$ (208).

Detailed Description of the Invention

The present invention describes a method and a system for the generation of random numbers in those environments in which it is necessary to assure:

a) the unpredictability in the generation of said numbers (i.e., no party can predict the resulting numbers, not even partially);

b) the subsequent reliable audit of the processes followed for said generation, and particularly of the authenticity and integrity of the random numbers; and
c) the efficiency (speed) of the process for generation of the random numbers and of the associated security measures.

Said invention additionally allows the shared generation of the random numbers assuring impartiality in the generation of said numbers (i.e., that no party can arbitrarily choose or influence the resulting numbers).

Random numbers or results are understood to be any random digital value independently of its end representation. It can thus be considered that a random number can represent random values in different formats such as a number, a set of alphanumeric characters or a cryptographic key.

The present invention considers two different components for such purpose which participate in the generation of the random number. The first component is that which needs the random numbers (for example an electronic game application) and will be called processing module. Furthermore, as an essential part of the invention, the method introduces a second component which is responsible for providing security to the generation of the random numbers. This component will be identified as the randomness module and is in communication with the processing module for at least sending the resulting random numbers to the latter.

In the basic embodiment of the method, for the generation of a random number, the randomness module executes an *MAC* cryptographic function (MAC or Message Authentication Code is an authenticity tag derived from applying to information a compaction scheme along with a symmetric cryptographic key; an MAC function differs from a digital signature in that it is calculated and verified with the same key; see the detailed explanation and references in the document http://www.rsasecurity.com/rsalabs/node.asp?id=2177 from RSA Laboratories, active reference as of March 2, 2006) by using digital information *I* prepared from digital information *V* received externally and/or digital information *M* stored in the randomness module as input. In order to execute the *MAC* function, the randomness module uses its own cryptographic *key K* of the module. The randomness module therefore obtains a result value *r* with random properties. The final random number *R* can be both the same value *r* and can also be obtained by applying a deterministic function *d* on said value *r*. In a preferred embodiment of the method, the randomness module will be that responsible for calculating the function *d* on the value *r*. Nevertheless, in another embodiment, the calculation could be carried out by the processing module. In any case, the random number *R* will be that which the processing module will finally use.

$$r = MAC(K, I)$$

$$R = d(r)$$

In a preferred embodiment of the method, the identity function will be applied as a deterministic function *d*, the resulting random number therefore being R=r. In other additional embodiments the arithmetic function module or the truncation of bits could be used as a deterministic function.

In order to generate said random number, the randomness module can receive a signal, request or message *S* requesting its generation. This request will generally be produced and sent by a processing module although the possibility that it can be sent by a third independent module or even generated by the same randomness module (for example this module could be constantly generating random numbers) is also considered.

The key *K* is a unique symmetric cryptographic key of the randomness module, which could have been generated in the same module or securely installed during its initialization. The use of said key *K* will allow that during an audit it can be verified that the random number *R* has been effectively generated by said randomness module and has not been tampered with after its generation. It must be noted that this feature could not occur in the event of only using hash functions instead of *MAC* functions.

In order to implement the proposed method it is necessary that the randomness module has at least storage means in which digital information (at least the cryptographic key *K*) can be saved. It is also necessary that said module has processing means capable of executing an *MAC* cryptographic operation (such as HMAC or PMAC for example). In a preferred embodiment the randomness module would be implemented using a tamper-proof hardware device, also known as Hardware Security Module or HSM. These types of devices prevent a third party from being able to tamper with or access the critical components of the method, such as the key *K* and the implementation of the *MAC* function.

The method of the present invention allows the generation of the random numbers in a shared manner, thus improving the previously existing methods with regard to their execution speed in real environments. Said shared generation involves at least two different parties providing their respective participations to the process for generation of the random numbers. In a preferred embodiment of the method these two different parties are the processing module and the randomness module. In this case, the request *S* sent by the processing module can also comprise the value *V* which will be used by the randomness module in preparing the digital information *I*.

The use of this value *V*, which has been generated outside the randomness module, allows assuring the non-discretional criterion by the randomness module in the generation of the random number. In a first embodiment, the method only uses this external value *V* for preparing the contents of the digital information *I* which is used as input of the *MAC* function.

$$r = MAC(K,V)$$

Another possible embodiment is based on operating the value *V* with the digital information *M* and using the result of the operation as the input value to the *MAC* function.

$$r = MAC(K,V \otimes M)$$

The operation $\otimes$ can be of many different types, such as the concatenation or a bit to bit operation between the value *V* and the information *M* for example. In a preferred embodiment a bit to bit XOR is used as an operation.

The value *V* can be of a random nature or contain information prepared by said processing module, such as data received from an interaction with a user for example. This additional information will thus also be linked to the resulting value *R*.

In a first extension of the method, the input of the *MAC* function is provided feedback with a value depending on the previously generated random numbers (in a basic embodiment it could be directly related to the actual random numbers). A generation of sequences of random numbers securely linked to one another is thus achieved. Due to the feedback, all these random numbers are different although the value of the key *K* and/or the value *V*, if it was received, are always the same. The key *K* and/or the value *V*, if it was received, could thus be used an undetermined number of times to generate different random numbers.

In the generation of these sequences of random numbers, the value *V* could be used only in the generation of the first random number. The feedback by means of the successive values *r* or *R* (or values derived from the successive values *r* or *R* through a certain function *f*) assures the diversity of the random numbers within the sequence.

$$r_1 = MAC(K,V)$$
$$r_2 = MAC(K, f(r_1))$$
$$.$$
$$.$$
$$.$$
$$r_i = MAC(K, f(r_{i-1}))$$

In a second extension of the method the existence of a third module which will be called recording module will be considered. The main function of this module is that of receiving and storing at least the value of the key *K* used by the randomness module in order to facilitate subsequent audits relating to the generated random numbers. For the purpose of improving the security of the method, it is proposed that the randomness module changes the value of the key *K* after the generation of a certain number of random numbers *R* (iterations) or after a certain time period. The maximum value of iterations or time after which a new key *K* is generated could have been previously configured in the randomness module or could be specified by means of one of the requests or signals S sent to the randomness module.

In a preferred embodiment, each time the randomness module changes the value of the key *K*, it notifies the recording module of the change and sends it the previous value of *K* used. The value of the previous key *K* is thus available in said recording module in order to be able to facilitate the audit of the previously generated random numbers by means of said key *K* The current value of *K* will not be revealed to the recording module so as to not put the security of the generation of the new random numbers in danger. On the contrary if any party knew the current key *K* it could deduce the following random number to be generated by the randomness module.

In another alternative embodiment the randomness module sends the recording module a commitment of the new value of the key *K*, possibly along with its old value. Therefore each time the recording module receives the old value of *K* it can verify that it corresponds with the commitment received in the previous key change. This commitment could be based for example on the application of a summary cryptographic operation (hash function) on the value *K* whereby the randomness module is committed.

In another alternative embodiment the randomness module sends the recording module an encryption of the new value of the key *K*, possibly along with its old value. Said encryption would use a technique which allows assuring that the decryption can only be carried out by the designated party. For this purpose it can be based for example on a digital envelope, constructed by means of the public key of said designated party.

In any case, said recording module could additionally also store other useful values for facilitating the audit of the method, such as the values associated to *M*, *I*, *V* and/or *R* used in each generation process. Said values could be obtained from the randomness module and/or from the processing module. The recording module could implement cryptographic practices for assuring the authenticity, integrity and non-repudiation of the recorded information. Examples of these practices could be the cryptographic chaining of the records and/or the digital signature of the latter by means of a pair asymmetrical keys. It must be taken into account that although they are not stored in the recording module, some of these values could be stored in the processing module, therefore they could be used for the audit.

It must be pointed out that the described extensions and variants of the method can be combined with one another. For example, a request S to the randomness module can simultaneously contain a request for changing the key K and an external value V for the generation of the next random number.

In order to put the method of this invention into practice it is necessary that the randomness module is formed by electronic and/or computer components which are integrated, connected or communicated with the processing module in some way. For example, both modules could be implemented in two different computers connected by a data transmission line such as a communication network or a dedicated line such as a serial or USB cable. Additionally, both modules could also be considered as components of a single computer with an internal connection between them. In this case one of the modules (for example, the randomness module) can be considered to be a hardware component connected to the internal bus of said computer, such as a chip of the mother board or a PCI board.

As has been previously introduced, in a basic embodiment of the method the electronic and/or computer components of the randomness module include:

  a) processing means for at least computing the *MAC* cryptographic function.
  b) storage means for at least saving the key *K*.
  c) input and output means for at least notifying the resulting value *r* or *R*.

In an also preferred embodiment the randomness module would be provided with a random key generator for facilitating the periodic renovation of the key *K*

Part of the storage means of the randomness module can additionally be in some type of device with HSM (Hardware Security Module) type physical protection in which at least the key *K* would be generated and/or stored. This device could also be used for protecting at least part of the processing means of the randomness module for the purpose of allowing the secure calculation of the *MAC* cryptographic function and/or of any other cryptographic operation necessary for implementing the method. Examples of an HSM device are smartcard-type devices or PCI, PCMCIA or USB cryptographic boards.

With regard to the recording module this invention considers that it is formed by at least:

  a) input and output means through which it will at least receive the information to be recorded.
  b) storage means in which it will at least record the information received by said input and output means.

Said recording module will be communicated with the randomness module (directly or through the processing module) by means of said input and output means by using a dedicated line or a communication network.

In a preferred embodiment said recording module will comprise a database server for speeding up the information searches in the case of an audit.

In another preferred embodiment said recording module will comprise a removable device (for example, smartcard or pen drive type device) for facilitating the transfer of the information stored in the recording module to a suitable audit environment.

In another preferred embodiment said recording module will consist of a Write Once Read Many (WORM) device such as a DVD±R or CD-R recorder. The information could therefore not be modified once saved.

It can be seen that the described method for the secure generation of random numbers allows auditing the correct generation of each of the random numbers (and particularly their authenticity and integrity) without indispensably requiring any cryptographic operation to that end that is considered expensive, such as a digital signature. This considerably improves the execution times of the other methods proposed up until now. Nor does the described method necessarily require any of the components to send a commitment of the values generated (*M, V* and/or *K*) to another of the parties to subsequently verify the security and impartiality in the generation of the random numbers.

**Claims**

1. A method for the secure generation of random numbers by electronic means, wherein at least one Randomness Module (102) with the capacity to execute at least one MAC cryptographic function (301) and provided with a symmetric cryptographic key *K (202),* said method comprising the following steps necessary for said secure generation of each of said random numbers:

  a) Preparing (303) digital information *I (201)* from digital information *V (205)* received externally and/or digital information *M (207)* stored in said Randomness Module (102).
  b) Generating a random result *r (203)* by applying said MAC cryptographic function (301) on said digital information *I (201)* and using to that end said cryptographic key *K (202).*

2. The method according to claim 1, **characterized in that** a deterministic function *d (302)* is applied to said result *r (203)* obtained in step b) to obtain a final random value *R (206).*

3. The method according to claim 2, **characterized in that** said deterministic function *d (302)* is the identity function.

4. The method according to claim 2, **characterized in that** said deterministic function *d (302)* is of the type comprising an arithmetic module or a truncation of bits.

5. The method according to claim 2, **characterized by** comprising an additional step c) after said step b) which consists of sending said final random value $R$ *(206)* to an external module with the capacity to receive said value $R$ *(206)*.

6. The method according to claim 1, **characterized in that** said symmetric cryptographic key $K$ (202) has been randomly generated.

7. The method according to claim 1, **characterized in that** said digital information $M$ *(207)* stored in said Randomness Module (102) is obtained from said results $r$ *(203)* obtained in previous executions of said secure generation of random numbers.

8. The method according to claim 1, **characterized in that** said preparation (303) of said digital information $I$ *(201)* only consists of using said digital information $V$ *(205)* received externally.

9. The method according to claim 1, **characterized in that** said preparation (303) of said digital information $I$ *(201)* consists of a concatenation, in any order, of said digital information $V$ *(205)* received externally with said digital information $M$ *(207)* stored in said Randomness Module (102).

10. The method according to claim 1, **characterized in that** said preparation (303) of said digital information $I$ *(201)* consists of a bit to bit XOR operation between said digital information $V$ (205) received externally and said digital information $M$ *(207)* stored in said Randomness Module (102).

11. The method according to claim 1, **characterized by** an additional step c) carried out only before a certain event e, such as the reception of an external renovation request to the Randomness Module (102), a predetermined period of time going by or the generation of a predetermined number of random numbers, comprising a renovation of the value of said symmetric cryptographic key K (202) of the Randomness Module (102).

12. The method according to claim 11, **characterized in that** said digital information $M$ *(207)* stored in said Randomness Module (102) is obtained from said results $r$ *(203)* obtained in previous executions of said secure generation of random numbers.

13. The method according to claim 12, **characterized in that** a deterministic function $d$ *(302)* is applied to said result $r$ *(203)* obtained in step b) to obtain a final random value R (206).

14. The method according to claim 11, **characterized by** an additional step d) comprising a record in said Randomness Module (102) or in an external module with storage capacity, of the value of said symmetric cryptographic key before said renovation $K_{i-1}$ *(208)*.

15. The method according to claim 11, **characterized by** an additional step d) comprising a record in said Randomness Module (102) or in an external module with storage capacity, of a cryptographic commitment $H(K)$ *(304)* of the new value of said symmetric cryptographic key K (202) obtained after said renovation.

16. The method according to claim 15, **characterized in that** said cryptographic commitment $H(K)$ *(304)* is a one-way summary function or hash function.

17. The method according to claim 1, **characterized in that** said MAC cryptographic function (301) is of the group comprising at least one CBC-MAC, one RIPE-MAC or one HMAC.

18. The method according to any of the previous claims, **characterized by** an additional step A) before said step a) comprising a reception by said Randomness Module (102) of an internally or externally generated request S (204) requesting the generation of a random result.

19. A system for the secure generation of random numbers by electronic means which can be applied to implement the method described in claims 1 to 18, **characterized in that** it comprises, in combination:

a. At least one Process Module (101) with which at least one user or one application interacts, configured to carry out a certain action from the obtaining of a random number and integrating:

i. data input and output means for receiving at least one random number;
ii. process means for carrying out at least said certain action;

b. At least one Randomness Module (102) adapted for an interconnection or an integration with one or more Process Modules (101) and for the secure generation of random numbers according to the described method, said Randomness Module (102) integrating;

i. Storage means for storing at least one symmetric cryptographic key (202);
ii. Process means for calculating at least one MAC cryptographic function (301) on digital information (201) using to that end said symmetric cryptographic key (202);

iii. Data input and output means for transmitting to said Process Module or Modules at least one piece of digital information derived from the result (203) of said MAC cryptographic function (301);

20. The system according to claim 19, **characterized in that** said Randomness Module (102) further comprises a random key generator for generating or updating said symmetric cryptographic key.

21. The system according to claim 19, **characterized by** further comprising at least one Record Module (103) adapted for an interconnection or integration with said Randomness Module (102) or said Process Module (101) to store digital information generated in said Randomness Module (102), integrating:

i. Input and output means for receiving digital information generated in said Randomness Module (102);
ii. Storage means for storing at least said digital information received;

22. The system according to claim 21, **characterized in that** at least part of said storage means of said Record Module (103) are a database server.

23. The system according to claim 21, **characterized in that** at least part of said storage means of said Record Module (103) use a write once device such as a WORM.

24. The system according to claim 19, **characterized in that** at least part of said storage means of said Randomness Module (102) are in a non-volatile memory.

25. The system according to claim 19, **characterized in that** at least part of said storage means and/or at least part of said process means of said Randomness Module (102) have physical protection measures provided by a sealed hardware.

26. The system according to claim 25, **characterized in that** said sealed hardware is chosen from the group comprising at least a hardware security module, a cryptographic plate, or a removable device such as a smartcard.

27. The system according to claim 20, **characterized in that** at least part of said storage means and/or at least part of said process means and/or at least part of said random key generator of said Randomness Module (102) have physical protection measures provided by a sealed hardware.

28. The system according to claim 19, **characterized**

**in that** said Process Module (101) forms part of an electronic game terminal.

Figure 1

Figure 2

Figure 3

Figure 4

Figure 5

**EP 2 006 810 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5778069 A
- WO 9829793 A
- WO 9912135 A
- WO 2004035159 A
- US 6934846 B
- US 20050135608 A